# FASCICULE DE BREVET EUROPEEN

(11) **EP 0 547 958 B1**
(45) Date de publication et mention de la délivrance du brevet: **01.07.1998**
(21) Numéro de dépôt: 92403408.5
(22) Date de dépôt: 15.12.1992
(51) Int. Cl.: H04L 12/56, H04J 3/16, H04Q 11/04

(54) **Procédé et un système de transmission d'information de communication sur une liaison de transmission par blocs de données de longueur variable en multiplexage temporel de type asynchrone**
Verfahren und System zur Übertragung von Kommunikationsinformation über eine Übertragungsverbindung von Datenblöcken variabler Länge und asynchronen Zeit
Procedure and system for transmitting communication information via a transmission link consisting of variable length data blocks in asynchronous time

(30) Priorité: 18.12.1991 FR 9115747
(43) Date de publication de la demande: 23.06.1993
(73) Titulaire: ALCATEL ALSTHOM COMPAGNIE GENERALE D'ELECTRICITE, 75008 Paris (FR)
(72) Inventeur: Henrion, Michel, B-1180 Bruxelles (BE)
(74) Mandataire: Pothet, Jean Rémy Emile Ludovic

(56) Documents cités:
- EP-A- 301 934
- EP-A- 354 120
- EP-A- 446 540
- US-A- 5 003 535

## Description

La présente invention a pour objet un procédé et un système de transmission d'information de communication sur une liaison de transmission par blocs de données de longueur variable en multiplexage temporel de type asynchrone.

La transmission classique à multiplexage temporel asynchrone, ou transmission ATM, sur une liaison de transmission ATM, est un procédé de transmission numérique dans lequel l'information est transmise sous forme de cellules. Ces cellules sont des groupes de bits successifs, comprenant notamment des bits d'en-tête et des bits d'information utile. Les bits d'en-tête d'une cellule fournissent des informations internes à un réseau de transmission ATM incluant des liaisons de transmission ATM, par exemple des informations sur la destination de la cellule. On appelle "information utile", l'information transmise par le réseau de transmission ATM pour des équipements terminaux externes connectés au réseau de transmission ATM.

Une des caractéristiques de la transmission ATM est que des cellules successives sont transmises sur une liaison de transmission sans interruption. De ce fait, en l'absence d'information utile à transmettre, une liaison de transmission ATM achemine des cellules dites "vides", c'est-à-dire des cellules ne contenant aucune information utile, mais contenant une information convenue aisément reconnaissable.

On trouvera une description complète de la technique de transmission ATM par exemple dans l'ouvrage de Martin de Prycker, "Asynchronous Transfer Mode", publié par Ellis Horwood en 1991, ou bien en consultant les avis correspondants du CCITT.

Dans sa version actuelle, la technique de transmission ATM est basée sur des cellules ayant toutes la même longueur et constituées chacune d'un en-tête et d'un champ d'information utile. On a pensé à inclure dans l'en-tête des bits de contrôle, par exemple des bits correspondant à un calcul de contrôle par redondance cyclique, ou calcul de CRC. Un tel calcul peut porter sur une partie ou sur tout l'en-tête. Un exemple typique de cellules de longueur fixe est fourni par la transmission ATM en cellules de 53 octets dans laquelle chaque cellule est constituée d'un en-tête de 5 octets et d'un champ d'information utile de 48 octets.

En s'écartant déjà de la transmission ATM telle qu'on vient de la définir, a également été envisagé, dans un procédé de transmission amélioré, de transmettre des cellules de longueur variable. On se reportera notamment aux documents de brevet EP-A1-0 441 787 et EP-A1-0 446 540. De telles cellules de longueur variable sont alors constituées de sous-cellules d'une même longueur fixe. On trouve alors, sur les liaisons de transmission, des cellules de longueur variable constituées de sous-cellules de longueur fixe ainsi que des cellules vides. Une cellule de longueur variable comprend au moins une sous-cellule d'en-tête et une ou plusieurs sous-cellules de données. Une cellule vide est de même longueur qu'une sous-cellule utilisée pour les cellules de longueur variable, ou encore comprend une telle sous-cellule.

Donc, dans les documents mentionnés, la transmission porte sur des sous-cellules toutes de la même longueur,

L'invention vise à améliorer encore l'efficacité de transmission, par rapport au procédé de transmission déjà amélioré ci-dessus.

Elle est relative à un procédé et un système qui s'écarte à ce point de la transmission ATM, qu'il a paru souhaitable de s'en distinguer, en employant les mots "bloc" et "sous-bloc" au lieu de "cellule" et "sous-cellule" pour désigner des unités de données de transmission qui sont semblables aux précédentes à bien des égards, mais néanmoins différentes sur certains points, comme on va le voir.

L'invention part ainsi d'une méthode de transmission employant des blocs de longueur variable composés chacun d'un sous-bloc d'en-tête et d'un ou plusieurs sous-bloc de données et de blocs vides composés chacun d'un sous-bloc vide, soit trois types de sous-blocs différents, à l'instar de la méthode précédemment décrite.

Elle se fonde sur l'observation que les conditions qui déterminent la longueur optimale des sous-blocs d'un type déterminé ne sont pas les mêmes que celles qui déterminent la longueur optimale des sous-blocs d'un autre type et que, par conséquent, les longueurs optimales des deux types de sous-blocs ne sont pas les mêmes, sauf coïncidence.

L'invention consiste en un procédé de transmission dans lequel les sous-blocs de l'un des trois types de sous-blocs ont une même longueur, longueur différente des longueurs respectives des sous-blocs des deux autres types.

D'une façon générale, l'invention permet ainsi que les sous-blocs de chacun des trois types aient une longueur optimale.

L'invention prévoit encore que ladite longueur différente soit modifiable, c'est-à-dire paramétrable.

De la sorte un même système de transmission installé dans certaines conditions emploira des sous-blocs de longueurs adaptées à ces conditions et pourra donc être exploité de façon optimisée, puis, les conditions ayant changé, les longueurs des sous-blocs pourront être modifiées en conséquence et l'exploitation rester optimisée.

Dans la mise en oeuvre de cette méthode de transmission, les sous-blocs de chacun des types de sous-blocs contiendront une indication d'identification de type de sous-bloc, ce qui permettra, à la réception, d'identifier le type auquel appartient un sous-bloc reçu et donc sa longueur.

La longueur de chaque sous-bloc est nécessaire pour effectuer la recherche et la vérification de la synchronisation de sous-bloc. Cet aspect de la méthode de transmission de l'invention fait l'objet d'une demande de brevet déposée ce jour par le présent demandeur et ayant pour titre "Procédé de synchronisation de liaison de transmission de blocs de données de longueur variable en multiplexage temporel de type asynchrone".

Avantageusement, ladite indication sera au moins partiellement implicite, en tenant compte de ce que le type du sous-bloc précédent est connu et conditionne, au moins en partie, le type d'un sous-bloc considéré.

L'invention concerne également un dispositif appliquant, tant à l'émission qu'à la réception, le procédé de transmission que l'on vient de définir.

Les avantages de la présente invention ressortiront mieux de la description suivante, donnée uniquement à titre d'exemple et en référence aux dessins annexés, où :
- la figure 1 représente un système de transmission dans lequel peut être appliquée la présente invention;
- la figure 2 représente les données transmises dans le système de la figure 1;
- la figure 3 représente un ordinogramme utilisé à l'émission dans un dispositif mettant en oeuvre le procédé selon l'invention;
- la figure 4 représente un ordinogramme utilisé à la réception dans un dispositif mettant en oeuvre le procédé selon l'invention;
- la figure 5 est un schéma-bloc d'une unité d'émission d'un dispositif mettant en eouvre le procédé selon l'invention;
- la figure 6 est un schéma-bloc d'une unité de réception d'un dispositif mettant en oeuvre le procédé selon l'invention.

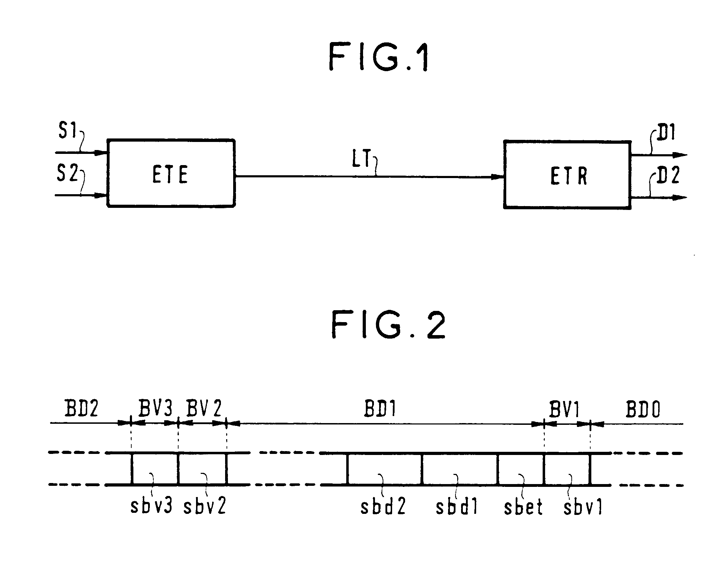

La figure 1 représente un système de transmission dans lequel peut être appliquée la présente invention. Ce système comprend une liaison de transmission LT véhiculant d'une extrémité de transmission d'émission ETE à une extrémité de réception ETR des signaux de transmission électromagnétiques, éventuellement optiques, pouvant sur commande prendre au moins deux états pour caractériser de l'information numérique, c'est-à-dire des données.

De l'information de communication à transmettre est communiquée à l'extrémité d'émission par une ou plusieurs sources d'information ; on a représenté des sources S1 et S2. L'information de communication reçue a l'extrémité de réception ETR est fournie à un ou plusieurs destinataires d'information ; on a représenté des destinataires D1 et D2.

Le mode de transmission entre les sources et l'extrémité d'émission ETE ne fait pas partie de l'invention. L'information à transmettre acquise par l'extrémité de transmission ETE y est arrangée, à moins qu'elle ne le soit déjà, conformément au procédé de l'invention, pour être transmise, par la liaison de transmission LT, à l'extrémité de réception ETR, et être fournie de là à ses destinataires, selon un mode de transmission, le même que le précédent ou un autre, qui ne fait pas davantage partie de l'invention.

L'invention porte sur le mode de transmission entre l'extrémité d'émission ETE et l'extrémité ETR, selon lequel, conformément à une technique connue, l'information de communication est transmise sur la liaison de transmission LT, par blocs de données de longueur variable, en multiplexage temporel de type asynchrone, les blocs de données étant transmis sur la liaison de transmission de façon consécutive et chaque bloc de donnée étant soit utile lorsqu'il contient effectivement de l'information de communication, soit vide lorsqu'il n'en contient pas. Chaque bloc de données utile comprenant un sous-bloc d'en-tête, d'un premier type, contenant des données de contrôle et au moins un sous-bloc de données d'information utile, chaque bloc de données vide comprenant un sous-bloc vide, d'un troisième type. Ce mode de transmission est illustré à la figure 2. On y a représenté de la droite vers la gauche, un bloc de données utile en fin de transmission BDO, suivi par un bloc vide BV1, un bloc de données d'information utile BD1, deux blocs de données vides BV2 et BV3, le début d'un bloc de données d'information utile BD2.

Dans cet exemple, tous les blocs vides sont identiques et se composent chacun d'un sous-bloc vide, sbv1, sbv2, sbv3. Un bloc de longueur variable comprend au moins un sous-bloc d'en-tête et un ou plusieurs sous-blocs de données. Les blocs de données vides sont transmis en l'absence de blocs de données d'information utile à transmettre afin que le processus de transmission soit continu, permettant notamment le maintien constant de la synchronisation de l'extrémité de réception sur l'extrémité d'émission, au niveau des signaux de transmission élémentaires, c'est-à-dire au niveau bit.

Ils ont donc tous une même longueur, exprimée en un certain nombre de signaux élémentaires, en bits par exemple.

Les blocs de données d'information utile, tels que BD1, comprennent tous un sous-bloc d'en-tête sbet, suivi d'un nombre variable de sous-blocs de données tels que sbd1, sbd2, etc. Les sous-blocs d'en-tête des différents blocs de données ont tous une même longueur. Les sous-blocs de données des blocs de données ont tous également une même longueur.

La transmission de blocs de données utiles à longueur variable vise à améliorer l'efficacité de transmission, c'est-à-dire le rapport entre le volume d'information utile acheminée et le volume des données effectivement transmises.

Chaque bloc de données comprend un en-tête contenant des données de service servant à l'acheminement et au contrôle du bloc de données; la présene de cet en-tête dans chaque bloc de données réduit d'autant plus l'efficacité de la liaison de transmission que le bloc de données est petit. Il faudrait donc que les blocs de données soient longs. Mais par ailleurs, l'information à transmettre n'est normalement pas segmentée en concordance avec la longueur des blocs de données. Donc les blocs de données seront mal remplis et la perte d'efficacité de transmission augmentera avec la longueur des blocs de données. Il faudrait donc que les blocs de données soient courts.

En outre, l'allongement des blocs de données se heurte à des contraintes techniques dans les équipements traitant les blocs de données : d'une part, des blocs de grandes longueurs ne peuvent plus en pratique être traité en représentation parallèle et il faut les traiter en série, ce qui apporte des contraintes de temps de traitement; d'autre part, la mémorisation temporaire de blocs de données de grande longueur nécessite des mémoires tampon de capacité d'autant plus grande. A nouveau, il faudrait que les blocs de données soient courts.

La transmission par cellules de données à longueur variable structurées en sous-cellules décrite dans les deux documents cités au début de ce texte apporte une réponse à telles exigences contradictoires.

Dans les exemples connus appliquant la transmission par blocs de données à longueur variable, tous les sous-blocs ont la même longueur. Cela peut paraître justifié, pour des raisons de simplicité dans le traitement de sous-blocs ayant tous la même longueur et dans le découpage en sous-blocs de l'information reçue, dans l'extrémité de réception.

L'invention, partant de la constatation qu'il ne peut être toujours optimal, en terme d'efficacité de transmission, de transmettre des sous-blocs ayant tous la même longueur, propose une méthode et un dispositif de transmission d'information de communication, sur une liaison de transmission, par blocs de données de longueur variable, telle que définie plus haut, cette méthode et ce dispositif étant caractérisés en ce que ces sous-blocs d'un des types au moins ont une longueur différente des longueurs respectives des sous-blocs des deux autres types.

Par exemple, dans le mode de transmission illustré à la figure 2, les sous-blocs vides sont plus courts que les sous-blocs de données. En supposant, en effet, que la longueur des sous-blocs de données soit fixée par des considérations techniques ayant trait aux équipements traitant les données de ces sous-blocs à une valeur relativement élevée, tandis que la longueur des sous-blocs vide, telle que déterminée par des besoins d'acheminement d'informations d'exploitation et de maintenance, est relativement courte, l'invention prévoit donc, par exemple, de donner une longueur réduite aux sous-blocs vides.

Comme les conditions évoquées ci-dessus, qui déterminent la longueur optimale respective des sous-blocs de chaque type, sont essentiellement circonstancielles et changeront évidemment dans le cours du temps, l'invention prévoit en outre que ladite longueur différente soit une longueur modifiable, c'est-à-dire paramétrable.

De façon générale, l'invention consiste à prévoir des sous-blocs de chacun des trois types identifiés ayant une longueur déterminée indépendamment de celles des sous-blocs des autres types et paramétrable. Toutes les combinaisons de longueurs de sous-blocs sont concevables a priori.

Si l'on s'en tient aux valeurs relatives de longueurs de sous-blocs et en considérant les cas où les trois types de sous-blocs ont respectivement trois longueurs distinctes, on discerne six cas à considérer depuis celui où les sous-blocs vides, d'en-tète et de données sont de longueurs respectives croissantes, jusqu'à celui où, à l'inverse, ils sont de longueurs respectives décroissantes en passant par tous les cas intermédiaires.

Six autres cas apparaissent en considérant que deux types de sous-blocs ont la même longueur et que le troisième est soit plus court ou plus long. Si dans l'état actuel de la technique, le premier cas envisagé était celui qu'il faille adopter, d'autres cas pourraient s'avérer souhaitables, plus tard, les conditions techniques ayant changé.

L'intérêt de l'invention est de permettre d'y faire face non seulement maintenant en adoptant des longueurs de sous-blocs différentes mais aussi pour le futur, en adoptant des longueurs de sous-blocs paramétrables.

La mise en oeuvre du procédé selon l'invention implique des modifications et des améliorations de différentes fonctions et organes des systèmes de transmission de blocs de données asynchrone de type connu. Il importe en premier lieu que l'horloge qui compte les sous-blocs soit à même de prendre en considération les longueurs différentes que présentent les types de sous-blocs. En deuxième lieu, les circuits d'émission et de réception des blocs de données doivent fonctionner au rythme des longueurs des types de sous-blocs successifs. Enfin, les circuits constituant les ports d'entrée et de sortie doivent aussi s'adapter aux différentes tailles des différents types de sous-blocs transmis.

Pour mettre en oeuvre le procédé selon l'invention, on prévoit dans les unités de réception et d'émission une indication de type de sous-bloc à recevoir ou à émettre.

Grâce à cette indication, il est possible de réaliser une base de temps de sous-blocs, constituée d'un compteur, qui peut compter un nombre de bits ou d'octets différent selon l'indication du type de sous-bloc. On obtient ainsi une horloge de sous-bloc susceptible de générer des signaux de contrôle de réception ou d'émission d'un sous-bloc. Grâce à l'indication du type de sous-bloc à recevoir ou à émettre, les circuits de réception et d'émission des sous-blocs peuvent fonctionner correctement.

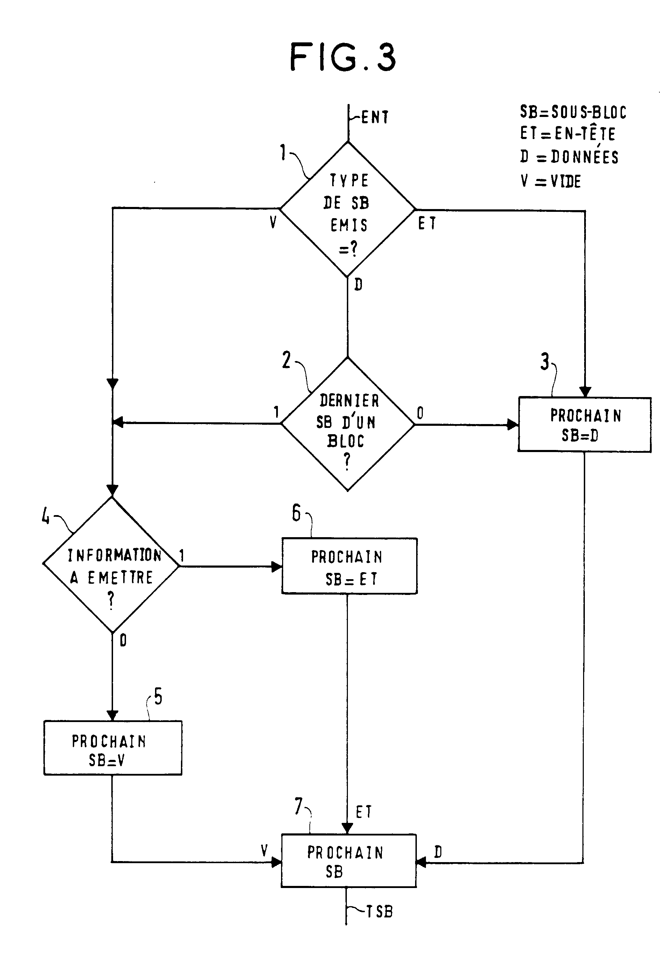

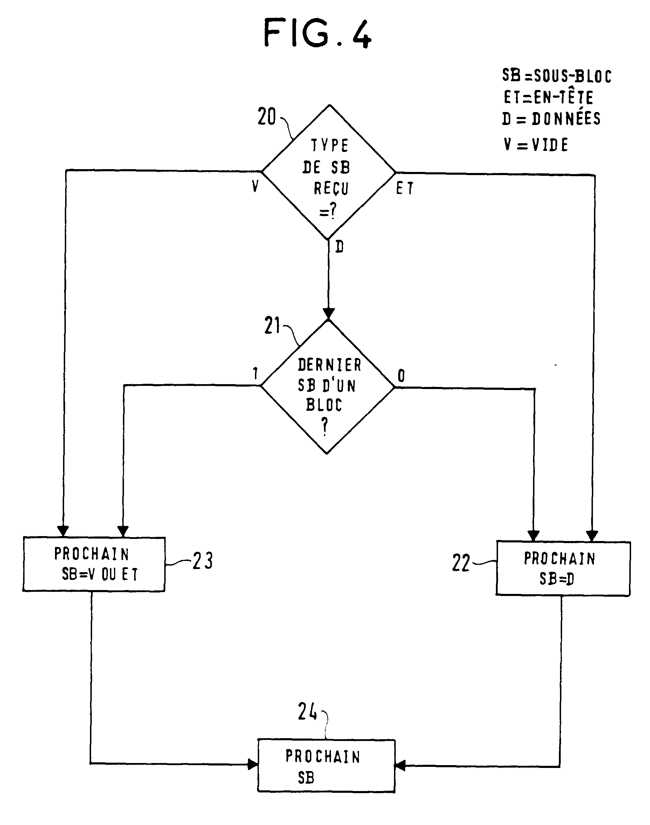

La figure 3 représente un ordinogramme utilisé à l'émission, dans une unité de transmission mettant en oeuvre le procédé de l'invention. Cet ordinogramme est utilisé pour déterminer de quel type sera le prochain sous-bloc à émettre après le sous-bloc en cours d'émission. Le résultat du calcul effectué selon cet ordinogramme permet de mettre à jour une indication de type de sous-bloc. L'ordinogramme de la figure 3, comme d'ailleurs celui de la figure 4, concerne le cas où les blocs de longueur variable sont constitués d'un premier sous-bloc d'en-tête suivi d'un nombre variable de sous-blocs de données, les blocs vides étant chacun constitués d'un sous-bloc vide. En outre, un procédé de délinéation de bloc de données ne faisant pas partie de la présente demande de brevet permet de savoir si un sous-bloc de données reçu est le dernier d'un bloc de données ou non. Ce procédé sera par exemple conforme à l'une des trois approches suivantes :
- une indication explicite est incluse dans le dernier sous-bloc données, ce qui revient à caractériser un quatrième type de sous-bloc données ("dernier sous-bloc de données") différent des autres;
- une indication explicite de longueur de bloc est incluse dans le sous-bloc d'en-tête (ou dans le premier sous-bloc de données), exprimée par exemple en nombre de sous-blocs de données dans le bloc, le dernier sous-bloc étant identifié par comptage;
- une détermination implicite est effectuée à posteriori, c'est-à-dire seulement lors de la réception du sous-bloc suivant (après le dernier sous-bloc de données d'un bloc que l'on n'a pas encore reconnu comme tel), car la réception d'un sous-bloc d'en-tête ou d'un sous-bloc vide après un sous-bloc de données signifie que celui-ci était le dernier du bloc de données (précédemment) en cours de réception.

Dans le système de transmission des deux documents cités plus haut, un sous-bloc vide est suivi soit d'un autre sous-bloc vide, soit du premier sous-bloc d'un bloc de données de longueur variable, qui est un sous-bloc d'en-tête. Un sous-bloc d'en-tête d'un bloc de longueur variable est suivie d'un sous-bloc de données. Enfin, un sous-bloc de données est suivie d'un autre sous-bloc de données s'il n'est pas le dernier sous-bloc de données d'un bloc de longueur variable. S'il est le dernier sous-bloc de données d'un bloc de longueur variable, ledit bloc de longueur variable est suivie soit d'un bloc vide, soit d'un autre bloc de longueur variable. De ce fait, le dernier sous-bloc de données d'un bloc de longueur variable est suivie soit d'un sous-bloc vide, soit d'un sous-bloc d'en-tête d'un bloc de longueur variable.

La première étape 1 de l'ordinogramme de la figure 3 consiste à analyser l'indication de type de sous-bloc actuellement émis. S'il s'git d'un sous-bloc d'en-tête, on passe à l'étape 3. S'il s'agit d'un sous-bloc de données, on passe à l'étape 2. S'il s'agit d'un sous-bloc vide, on passe à l'étape 4.

A l'étape 2 on détermine si le sous-bloc de données est le dernier du bloc de longueur variable en cours d'émission. Si oui, on passe à l'étape 4, et si non, on passe à l'étape 3.

A l'étape 3, on sait qu'il faut émettre un autre sous-bloc de données. On remet donc à jour l'indication du type de sous-bloc à émettre en y inscrivant que le sous-bloc suivant à émettre est un sous-bloc de données, puis on passe à l'étape 7.

A l'étape 4, on détermine si un bloc de longueur variable est prêt à être transmis, ou si on doit transmettre un bloc vide. Si l'on doit transmetttre un bloc de longueur variable, on passe à l'étape 6. Si l'on doit transmettre un bloc vide, on passe à l'étape 5.

A l'étape 5, on remet à jour l'indication du type de sous-bloc à émettre en y inscrivant que le sous-bloc suivante à émettre est un sous-bloc constituant un bloc vide, puis on passe à l'étape 7.

A l'étape 6, on remet à jour l'indication du type de sous-bloc à émettre en y inscrivant que le sous-bloc suivant à émettre est un sous-bloc d'en-tête d'un bloc de longueur variable, puis on passe à l'étape 7.

A l'étape 7, l'indication du type de sous-bloc a été remise à jour, et donc l'unité d'émission connaît la longueur du sous-bloc suivant à transmettre.

Ainsi, en utilisant l'ordinogramme de la figure 1, une unité d'émission d'une unité de transmission mettant en oeuvre le procédé selon l'invention peut déterminer le type des sous-blocs à transmettre. Cet ordinogramme est utilisé par l'unité d'émission à chaque fois qu'un sous-bloc est émis. Il demande, d'une source de données d'information utile, l'indication qu'il reste au moins un autre sous-bloc à émettre dans le bloc en cours d'émission, et l'indication qu'un autre bloc de données d'information utile doit suivre le bloc de données dont l'émission se termine.

La figure 4 représente un ordinogramme utilisé à la réception dans un dispositif mettant en oeuvre le procédé selon l'invention, pour déterminer de manière analogue quel est le type de sous-bloc à recevoir après le sous-bloc en cours de réception. La première étape 20 de cet ordinogramme consiste à analyser le type du sous-bloc en cours de réception. S'il s'agit d'un sous-bloc d'en-tête, on passe à l'étape 22, s'il s'agit d'un sous-bloc de données, on passe à l'étape 21, et s'il s'agit d'un sous-bloc vide, on passe à l'étape 23.

A l'étape 21, on détermine si le sous-bloc de données en cours de réception est le dernier sous-bloc de données du bloc de longueur variable qui le contient.

Ceci est possible, par exemple, grâce à un procédé de délinéation de bloc de données de longueur variable tel qu'évoqué dans ce qui précède. Une autre solution est que le sous-bloc de données fournisse lui-même cette indication. Si le sous-bloc en cours de réception est le dernier sous-bloc de données d'un bloc de longueur variable, on passe à l'étape 23. Si, au contraire, le sous-bloc en cours de réception n'est pas le dernier sous-bloc de données d'un bloc de longueur variable, on passe à l'étape 22.

A l'étape 22, on sait que le prochain sous-bloc reçue sera un sous-bloc de données. On remet donc à jour l'indication de type de sous-bloc en y inscrivant que le sous-bloc suivant reçue sera un sous-bloc de données puis on passe à l'étape 24 où cette information sera délivrée.

A l'étape 23, on sait que le prochain sous-bloc reçu sera soit un sous-bloc d'en-tête soit un sous-bloc vide. On remet à jour l'indication de type de sous-bloc en y indiquant que le prochain sous-bloc à recevoir sera soit un sous-bloc d'en-tête soit un sous-bloc libre, puis on passe à l'étape 24.

A l'étape 24, l'indication du type de sous-bloc à recevoir a été remise à jour et la partie de réception de l'unité de transmission sait que le sous-bloc suivant à recevoir est soit à coup sûr un sous-bloc de données, soit selon le cas un sous-bloc vide ou un sous-bloc d'en-tête, ce qui sera décidé en fonction du contenu du sous-bloc suivant. A cet égard, on doit rappeler qu'un sous-bloc vide est aisément reconnaissable et qu'un sous-bloc d'en-tête peut alors être reconnu par défaut. L'indication de type de sous-bloc est alors implicite.

La distinction entre un sous-bloc d'en-tête et un sous-bloc vide est aussi possible au moyen d'un indicateur approprié (tel qu'un bit signifiant en-tête ou vide) présent dans chaque sous-bloc d'en-tête ou vide et utilisé lors de la réception du sous-bloc. Elle n'est alors que partiellement implicite.

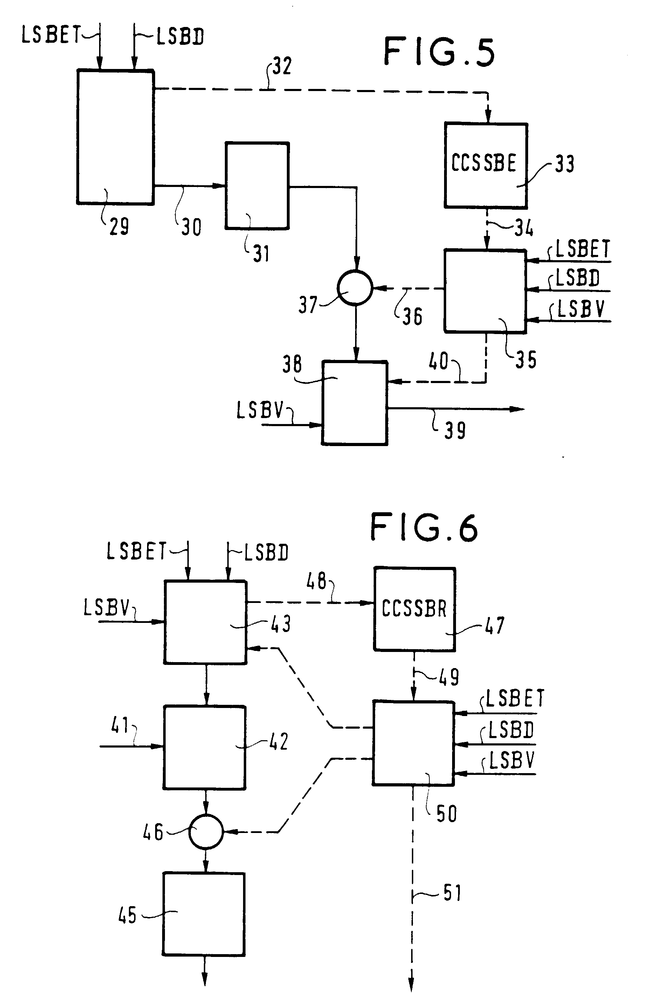

La figure 5 représente un schéma-bloc d'une unité de d'émission d'un dispositif mettant en oeuvre le procédé selon l'invention. La figure 5 n'est donnée qu'à titre d'exemple.

A la figure 5, l'unité 29 représente la partie de l'unité d'émission qui gère et met en forme les blocs de longueur variable à émettre, c'est-à-dire qui prépare des sous-blocs d'en-tête et les sous-blocs de données correspondantes. La structure de l'unité 29 est du domaine des connaissance de l'homme de l'art et n'est pas décrite plus en détail ici.

On mentionnera cependant que cette unité 29 reçoit d'une source commandable quelconque, des paramètres LSBET et LSBD spécifiant quelles sont les longueurs respectives des sous-blocs d'en-tête et des sous-blocs de données.

L'unité 29 fournit, sur sa sortie 30, les sous-blocs qu'elle a construits, conformément aux paramètres sus-indiqués, vers un registre de sortie 31. L'unité 29 fournit par ailleurs sur sa sortie 32 un signal indiquant d'une part si un nouveau bloc de longueur variable doit être émis et, d'autre part, si le sous-bloc en cours d'émission est le dernier d'un bloc de données ou non. Ce signal indiquant la présence des blocs de données successifs est transmis à un circuit 33 de contrôle de séquence de sous-blocs émis. Ce circuit 33 fournit à une unité 35 de base de temps de sous-blocs émis un signal 34 indiquant le type du sous-bloc à transmettre. Ce signal 34 est élaboré par le circuit 33 grâce à l'ordinogramme de la figure 1, sur la base du signal 32. L'unité 35 émet un signal de contrôle d'émission de sous-bloc de bloc de données 36 vers un dispositif de porte 37. Ce dispositif de porte 37 est relié à la sortie du registre 31 et laisse passer les sous-blocs de blocs de données au rythme contrôlé par le signal de commande 36. Ces sous-blocs sont transmis à une unité d'émission de sous-blocs 38 qui comprend un registre à entrée parallèle et sortie série dont la sortie série émet sur la liaison de transmission. L'unité 38 génère également des sous-blocs vides à transmettre sur instruction du signal 40 généré par la base de temps 35. A cette fin, l'unité d'émission de sous-blocs 38 reçoit un paramètre de longueur de sous-bloc vide LSBV fourni par une source appropriée qui peut être la même que celle qui fournit déjà les paramètres LSBET et LSBD déjà mentionnés.

Le fonctionnement de l'unité de l'émission représenté à la figure 5 est le suivant : si aucun bloc de longueur variable ne doit être émis dans l'unité 29, le signal 32 indique qu'aucun bloc de longueur variable ne doit être émis et l'unité 33 de contrôle de la séquence des sous-blocs fournit un signal 34 indiquant qu'un sous-bloc vide doit être transmis après le dernier sous-bloc du bloc de données éventuellement en cours. L'unité 35 de base de temps de sous-bloc compte donc un nombre de bits ou d'octets correspondant à la taille d'un sous-bloc vide, et bloque le signal 36 et active le signal de commande 40 de façon à transmettre l'ordre de transmettre un bloc libre générés par l'unité 35. De la sorte, l'unité d'émission de la figure 5 émet sur la liaison 39 des bits constituant un bloc vide. Alternativement, les bits constituant le bloc vide peuvent être stockés dans le registre de sortie 31 ou encore fournis par l'unité 29.

Si un bloc de longueur variable doit être émis, l'unité 29 fournit un signal 32 indiquant qu'un bloc doit être émis.

Sur la porte 30, l'unité 29 fournit les premiers bits du premier sous-bloc du bloc de longueur variable. Le circuit 33 de contrôle de séquence de sous-blocs reçoit le signal 32, et sur la base de l'ordinogramme de la figure 3, indique à l'unité 35 de base de temps le type du sous-bloc à émettre. Ainsi, l'unité 35 peut compter le nombre de bits ou d'octets correspondant à la taille du sous-bloc et activer des signaux de commande 36 correspondants. Lorsqu'un bloc de longueur variable est en cours d'émission, le circuit 33 de contrôle de séquence de sous-blocs est informé par le signal 32 du transfert du dernier sous-bloc du bloc de données.

Ainsi, le circuit 33 de contrôle de séquence de sous-blocs peut mettre en oeuvre l'ordinogramme de la figure 3 et, en particulier, l'étape 2 de cet ordinogramme où la question est de savoir si un sous-bloc de données en cours de transfert est le dernier sous-bloc d'un bloc de longueur variable. Grâce au signal 32, l'unité 33 sait si un autre bloc de longueur variable doit être émis, ce qui lui permet de répondre à la question posée à l'étape 4 de l'ordinogramme de la figure 3.

L'unité 35 de base de temps de sous-blocs doit être capable de fournir des signaux de commande 36 et 40 tenant compte de la taille de divers types de sous-blocs. Le comptage de sous-blocs de tailles différentes est possible grâce à une horloge de base réglée sur la fréquence d'émission des bits sur la liaison 39, ou sur un sous-multiple de cette fréquence, par exemple sur la fréquence d'émission de huit bits.

Cette horloge de base fournit un signal qui déclenche un compteur. Ce compteur est initialisé à une valeur dépendant du type de sous-bloc à émettre, tel qu'il est fourni par le signal 34. C'est pourquoi la base de temps 35 reçoit également les paramètres LSBET, LSBD et LSBV déjà mentionnés. A supposer que l'horloge de base compte les octets, si le signal 34 indique qu'un sous-bloc vide doit être émis, le compteur est initialisé au nombre d'octets d'un sous-bloc vide. Si le signal 34 indique qu'un sous-bloc d'en-tête doit être émis, le compteur est initialisé au nombre d'octets d'un sous-bloc d'en-tête. Et si le signal 34 indique qu'un sous-bloc de données doit être émis. Le compteur est initialisé au nombre d'octets d'un sous-bloc de données. Ainsi, l'unité 35 de base de temps de sous-blocs peut compter des sous-blocs de tailles différentes et émettre des signaux de commande 36 et 40 adéquats, et indiquer aux autres unités les limites des sous-blocs émis.

On peut ainsi mettre en oeuvre le procédé selon l'invention, grâce au dispositif décrit à titre d'exemple à la figure 5. La structure des unités et registres 31, 37 et 38, bien connue de l'homme de l'art, n'est pas décrite plus en détail.

La figure 6 représente un schéma-bloc d'une unité de réception d'un dispositif mettant en oeuvre le procédé selon l'invention. La figure 4 n'est donnée qu'à titre d'exemple. Les bits arrivent sur une liaison 41 et sont reçus par un registre 42 à entrée série et sortie parallèle. La sortie parallèle de ce registre 42 est reliée d'une part à une unité 43 de synchronisation. Cette sortie parallèle est reliée d'autre part à un registre de sortie 45, par l'intermédiaire d'un dispositif conditionneur 46. L'unité 43 de synchronisation fournit à un circuit 47 de contrôle de séquence de sous-blocs reçus un signal 48. Ce signal 40 indique le type du sous-bloc reçu ainsi que la présence ou non du dernier sous-bloc d'un bloc de données reçu. Le circuit 47 fournit un signal 49 indiquant le type de sous-bloc à recevoir après le sous-bloc en cours de réception. Ce signal 49 est fourni à l'unité 43 de synchronisation et à une unité 50 de base de temps de sous-bloc reçu. Cette unité 50 fournit des signaux de commande au dispositif 46 et à l'unité 43, ainsi qu'une indication de bloc de données reçu 51. Selon ces signaux de commande, le dispositif 46 laisse ou non passer l'information.

L'unité 43 de synchronisation met en oeuvre le procédé de synchronisation mentionné ci-dessu. Elle est capable de distinguer un sous-bloc vide d'un sous-bloc d'en-tête grâce à l'indicateur que contient ces deux types de sous-blocs.

Le circuit 47 met en oeuvre l'ordinogramme de la figure 4.

A cet effet, il reçoit le signal 48 provenant de l'unité 43 qui lui indique le type de sous-bloc reçu, ainsi que la présence éventuelle du dernier sous-bloc d'un bloc de données, ce qui lui permet, à l'étape 2 de l'ordinogramme de la figure 4, de savoir si un sous-bloc de données est ou n'est pas le dernier sous-bloc de données d'un bloc de longueur variable. De la sorte, l'unité 47 peut déterminer, selon l'ordinogramme de la figure 4, si le sous-bloc suivant à recevoir est un sous-bloc de données,ou si c'est un sous-bloc d'en-tête ou libre. Cette information est transmise par le signal 49 à l'unité 50 de base de temps de sous-blocs. Cette unité 50 est analogue à l'unité 35 décrite en référence à la figure 5 et peut compter les sous-blocs, d'après les indications de type de sous-blocs, qui lui sont fournies par le signal 49. Les unités de synchronisations 43 et de base de temps 50 reçoivent les paramètres LSBET, LSBD et LSBV mentionnés précédemment, pour accomplir leurs missions respectives.

Lorsque le sous-bloc à recevoir est un sous-bloc d'en-tête ou un sous-bloc libre, le signal 49 ne suffit pas à déterminer le type exact de sous-bloc. Ce type n'est connu qu'au moment de la réception où un sous-bloc vide est distingué d'un sous-bloc d'en-tête par l'indicateur mentionné précédemment. Le type en-tête ou vide du sous-bloc est alors transmis à l'unité 50. De cette façon, l'unité 50 peut compter les bits ou octets des sous-blocs et émettre les signaux de commande vers le dispositif 46, l'unité de synchronisation 49, et sur la sortie 51, aux instants appropriés.

L'unité 43 met en oeuvre le procédé de synchronisation sus-mentionné. La vérification de la synchronisation se fait au moins une fois par bloc de données, par exemple sur les sous-blocs d'en-tête et les sous-blocs vides, grâce à une information caractéristique de synchronisation présente dans le sous-bloc telle qu'un caractère de redondance cyclique (CRC). Si les sous-blocs d'en-tête et vides ont la même longueur, il est possible d'utiliser le même algorithme pour les calculs de CRC. Dans ce cas, les CRC calculés pouvant porter sur l'ensemble de l'information des sous-blocs. Si, au contraire, les sous-blocs d'en-tête et vides ont deux longueurs différentes, deux solutions sont possibles. On peut, d'une part, utiliser deux algorithmes différents, c'est-à-dire un algorithme pour chaque taille de sous-cellule. Dans ce cas, le calcul de CRC peut porter sur l'ensemble de l'information des sous-blocs. D'autre part, il est possible d'utiliser un seul algorithme et, dans ce cas, le calcul de CRC porte par exemple sur l'ensemble de l'information des sous-blocs du type le plus court, et sur seulement une partie de l'information des sous-blocs du type le plus long. Le reste de l'information de ces sous-blocs peut être au choix protégé par une autre protection, ou être dépourvu de protection.

L'emplacement exact des informations caractéristiques de synchronisation successives à l'aide desquelles l'unité 43 supervise la synchronisation correcte de la liaison est déterminé par cette même unité 43 à l'aide d'une part des informations de positionnement relatif associées (à ces informations caractéristiques de synchronisation) selon le procédé de synchronisation décrit dans la demande de brevet conjointe sus-mentionné et d'autre part des signaux de contrôle de sous-bloc reçu fourni par l'unité de base de temps 50 à l'unité de synchronisation 43.

La description qui précède suppose le cas général de 3 types de sous-blocs.

Il est évidemment possible que les trois types de sous-blocs ne présentent que deux longueurs différentes. Par exemple, les sous-blocs vides et les sous-blocs d'en-tête peuvent présenter la même longueur.

## Revendications

1. Procédé de transmission d'information de communication sur une liaison de transmission, par blocs de données de longueur variable, en multiplexage temporel de type asynchrone, des blocs de données étant transmis sur la liaison de transmission de façon consécutive et chaque bloc de données étant soit utile lorsqu'il contient effectivement de l'information de communication, soit vide, lorsqu'il n'en contient pas, chaque bloc de données utile comprenant un sous-bloc d'en-tête, d'un premier type, contenant des données de contrôle et au moins un sous-bloc de données d'information utile, d'un deuxième type, contenant de l'information de communication, chaque bloc de données vide comprenant un sous-bloc vide, d'un troisième type, caractérisé en ce que les sous-blocs de l'un des trois types de sous-blocs ont une longueur différente des longueurs respectives des sous-blocs des deux autres types.

2. Procédé selon la revendication 1, caractérisé en ce que ladite longueur différente est une longueur modifiable

3. Procédé selon la revendication 1 ou 2, caractérisé en ce que les sous-blocs de chacun desdits types de sous-blocs comprennent chacun une indication d'identification de type de sous-bloc d'identifier le type de sous-blocs de données auquel ils appartiennent.

4. Procédé selon la revendication 3, caractérisé en ce que ladite indication d'identificatioin de type de sous-bloc est partiellement implicite et tient compte du type auquel appartient le précédent sous-bloc.

5. Procédé selon l'une des revendications 1 à 4, caractérisé en ce qu'il est transmis, dans chaque bloc de données, au moins une information caractéristique de synchronisation, aux fins de synchronisation de bloc.

6. Procédé selon la revendication 5, caractérisé en ce qu'à une au moins information caractéristique de synchronisation d'un bloc est associée une information de positionnement relatif définissant l'emplacement d'une prochaine information caractéristique de synchronisation.

7. Dispositif de transmission d'information de communication sur une liaison de transmission, par blocs de données de longueur variable, en multiplexage temporel de type asynchrone, des blocs de données étant transmis sur la liaison de transmission de façon consécutive et chaque bloc de données étant soit utile lorsqu'il contient effectivement de l'information de communication, soit vide, lorsqu'il n'en contient pas, chaque bloc de données utile comprenant un sous-bloc d'en-tête d'un premier type contenant des données de contrôle et au moins un sous-bloc de données d'information utile d'un deuxième type, contenant de l'information de communication, chaque bloc de données vide comprenant un sous-bloc vide, d'un troisième type, caractérisé en ce qu'il comprend tant côté émission de la liaison de transmission que côté réception, des moyens définissant de façon modifiable la longueur respective des sous-blocs de chaque type de sous-blocs.

8. Dispositif selon la revendication 7, caractérisé en ce que, du côté émission de la liaison de transmission, il comprend une logique de séquencement des sous-blocs émission, informée du type de sous-bloc en cours d'émission, de la fin d'un bloc de données utile, et de la présence d'un nouveau bloc de données à transmettre, afin de déterminer le type du sous-bloc suivant à émettre sur le port de transmission.

9. Dispositif selon la revendication 7, caractérisé en ce que, du côté réception de la liaison de transmission, il comprend une logique de séquencement des sous-blocs reçus, informée du type du sous-bloc en cours de réception, afin de déterminer le type du sous-bloc suivant à recevoir sur le port de réception.

## Patentansprüche

1. Verfahren zur Übertragung von Kommunikationsinformation auf einer Übertragungsverbindung durch Datenblöcke mit variabler Länge, im Zeitmultiplexbetrieb vom asynchronen Typ, wobei Datenblöcke auf der Übertragungsverbindung nacheinander übertragen werden und wobei jeder Datenblock entweder ein Nutzdatenblock, wenn er effektiv Kommunikationsinformationen enthält ist, oder ein leerer Datenblock ist, wenn er keine enthält, wobei jeder Nutzdatenblock einen Kopf-Unterblock eines ersten Typs, der Steuerdaten enthält, und wenigstens einen Nutzinformations-Datenblock eines zweiten Typs, der Kommunikationsinformation enthält, umfaßt, wobei jeder leere Datenblock einen leeren Unterblock eines dritten Typs umfaßt, dadurch gekennzeichnet, daß die Unterblöcke eines der drei Typen von Unterblöcken eine von den jeweiligen Längen der Unterblöcke der anderen zwei Typen verschiedene Länge haben.

2. Verfahren nach Anspruch 1, dadurch gekennzeichnet, daß die unterschiedliche Länge eine modifizierbare Länge ist.

3. Verfahren nach Anspruch 1 oder 2, dadurch gekennzeichnet, daß die Unterblöcke von jedem der Typen von Unterblöcken jeder eine Unterblocktyp-Identifikationsangabe zum Identifizieren des Daten-Unterblocktyps haben, zu welchem sie gehören.

4. Verfahren nach Anspruch 3, dadurch gekennzeichnet, daß die besagte Unterblocktyp-Identifikationsangabe teilweise implizit ist und den Typ berücksichtigt, zu dem der vorhergehende Unterblock gehört.

5. Verfahren nach einem der Ansprüche 1 bis 4, dadurch gekennzeichnet, daß in jedem Daten-Unterblock wenigstens eine charakteristische Synchronisationsinformation zum Zweck der Block-Synchronisation übertragen wird.

6. Verfahren nach Anspruch 5, dadurch gekennzeichnet, daß wenigstens eine charakteristische Synchronisationsinformation eines Blocks einer relativen Positionierungsinformation zugeordnet ist, die den Platz einer nächsten charakteristischen Synchronisationsinformation definiert.

7. Vorrichtung zur Übertragung von Kommunikationsinformation auf einer Übertragungsverbindung durch Datenblöcke mit variabler Länge, im Zeitmultiplexbetrieb vom asynchronen Typ, wobei Datenblöcke über die Übertragungsverbindung nacheinander übertragen werden, und wobei jeder Datenblock entweder ein Nutzdatenblock ist, wenn er effektiv Kommunikationsinformation enthält, oder ein leerer Datenblock ist, wenn er keine enthält, wobei jeder Nutzdatenblock einen Kopf-Unterblock eines ersten Typs, der Steuerdaten enthält, und wenigstens einen Nutzinformations-Datenblock eines zweiten Typs, der Kommunikationsinformation enthält, umfaßt, wobei jeder leere Datenblock einen leeren Unterblock eines dritten Typs umfaßt, dadurch gekennzeichnet, daß sie sowohl auf der Sendeseite der Übertragungsverbindung als auch auf der Empfangsseite der Übertragungsverbindung Mittel aufweist, die in modifizierbarer Weise die jeweilige Länge der Unterblöcke eines jeden Typs von Unterblöcken definieren.

8. Vorrichtung nach Anspruch 7, dadurch gekennzeichnet, daß sie auf der Sendeseite der Übertragungsverbindung eine Abfolgesteuerlogik der Sende-Unterblöcke umfaßt, die über den Typ des in Sendung befindlichen Unterblocks, das Ende eines Nutzdatenblocks und über das Vorhandensein eines neuen zu übertragenden Datenblocks informiert ist, um den Typ des nachfolgend auf dem Übertragungsanschluß zu sendenden Unterblocks zu bestimmen.

9. Vorrichtung nach Anspruch 7, dadurch gekennzeichnet, daß sie auf der Empfangsseite der Übertragungsverbindung eine Abfolgesteuerlogik der empfangenen Unterblöcke umfaßt, die über den Typ des in Empfang befindlichen Unterblocks informiert ist, um den Typ des nachfolgend über den Aufnahmeanschluß zu empfangenden Unterblocks zu bestimmen.

## Claims

1. Method of sending data over a transmission link in variable length blocks in asynchronous transfer mode, blocks being sent over the transmission link consecutively and each block being either a data block if it contains data or an empty block if it does not, each data block comprising a header sub-block of a first type containing service data and at least one data sub-block of a second type containing data and each empty block comprising an empty sub-block of a third type, characterised in that the sub-blocks of one of the three sub-block types have a length different from the respective lengths of the sub-blocks of the other two types.

2. Method according to claim 1 characterised in that said different length is a modifiable length.

3. Method according to claim 1 or claim 2 characterised in that the sub-blocks of each of said sub-block types each comprise a sub-block type indication to identify the sub-block type to which they belong.

4. Method according to claim 3 characterised in that said sub-block type indication is partially implicit and allows for the type to which the preceding sub-block belongs.

5. Method according to any one of claims 1 to 4 characterised in that at least one indication characteristic of synchronisation is sent in each data block for purposes of block synchronisation.

6. Method according to claim 5 characterised in that at least one indication characteristic of synchronisation of a block is associated with a relative position indication defining the location of a subsequent indication characteristic of synchronisation.

7. Device for sending data over a transmission link in variable length blocks in asynchronous transfer mode, blocks being sent over a transmission link consecutively and each block being either a data block if it contains data or an empty block if it does not, each data block comprising a header sub-block of a first type containing service data and at least one data sub-block of a second type containing data and each empty block comprising an empty sub-block of a third type, characterised in that it comprises at the send and receive ends of the transmission link means for defining in a modifiable manner the respective lengths of the sub- blocks of each sub-block type.

8. Device according to claim 7 characterised in that it comprises at the send end of the transmission link sent sub-block sequence checking means advised of the sub-block type currently being sent, of the end of a data block and of the presence of a new data block to be sent in order to determine the next sub-block type to be sent.

9. Device according to claim 7 characterised in that it comprises at the receive end of the transmission link received sub-block sequence checking means advised of the sub-block type currently being received in order to determine the next sub-block type to be received.
